# EUROPÄISCHE PATENTANMELDUNG

(11) **EP 1 079 532 A2**
(43) Veröffentlichungstag der Anmeldung: **28.02.2001**
(21) Anmeldenummer: 00117491.1
(22) Anmeldetag: 12.08.2000
(51) Int. Cl.: H04B 1/38, H04B 1/08

(54) **Anordnung zum Rundfunkempfang und Telefonieren in einem Kraftfahrzeug**

(30) Priorität: 27.08.1999 DE 19940894
(71) Anmelder: BECKER GmbH, D-76307 Karlsbad (DE)
(72) Erfinder: Dibos, Herman, Dipl.-Ing. (FH), 75196 Remchingen (DE); Lappe, Dirk, Dipl.-Ing., 31174 Dinklar (DE)
(74) Vertreter: Patentanwälte Westphal, Mussgnug & Partner

(57) **Zusammenfassung**

Die Anordnung umfaßt zwei Antennen (3, 16), von denen eine an eine Rundfunkempfangsheit (2) und die andere an eine Sende-Empfangs-Einheit (19, 20) für Mobiltelefonie angeschlossen ist. Zudem sind eine Bedieneinheit (5) zur Mensch-Maschine-Kommunikation und eine mit der Rundfunksempfangseinheit (2), der Sende-Empfangs-Einheit (19, 20) für Mobiltelefonie und der Bedieneinheit (5) verbundene Steuereinheit (4) derart angeordnet, daß die Sende-Empfangs-Einheit (19, 20) für Mobiltelefonie abgesetzt von der Rundfunksempfangseinheit (2) im Bereich der Außenwand des Kraftfahrzeuges angeordnet ist.

## Beschreibung

Die Erfindung betrifft eine Anordnung zum Rundfunkempfang und Telefonieren in einem Kraftfahrzeug.

Neben dem heutzutage ohnehin üblichen Autoradio werden mehr und mehr auch Autotelefone in Kraftfahrzeugen eingesetzt. Dazu werden neben dem Autoradio unabhängig davon auch Autotelefonanlagen im Kraftfahrzeug installiert. Der begrenzte Innenraum insbesondere von Personenkraftfahrzeugen hat zur Folge, daß entweder das Autotelefon aufgrund der räumlichen Einengung als störend empfunden wird oder aber aus diesem Grunde eine feste Installation im Fahrzeug unterbleibt.

Um dem entgegenzuwirken sind auch Autotelefone auf dem Markt, die auf einem üblichen handlichen Mobiltelefon(Handy) basieren und die mittels eines Kabels mit dem Autoradio verbunden werden, wobei bestimmte Funktionseinheiten des Autoradios (z. B. Lautsprecher) mit verwendet werden. Die Bedienung dieser Anordnung erfolgt mittels des Handys. Damit ist aber der erzielte Platzgewinn verhältnismäßig gering. Außerdem wird das Kabel zwischen Autoradio und Mobiltelefon häufig als hinderlich empfunden.

Schließlich hat beispielsweise die Firma Blaupunkt ein Gerät entwickelt, in das sowohl ein Autoradio als auch ein Autotelefon integriert sind. Problematisch ist dabei jedoch, daß sich Autoradio und Autotelefon bei gleichzeitigem Betrieb gegenseitig stören können.

Aufgabe der Erfindung ist es daher, eine Anordnung zum Rundfunkempfang und Telefonieren in einem Kraftfahrzeug anzugeben, die diese Nachteile nicht hat.

Die Aufgabe wird durch eine Anordnung gemäß Patentanspruch 1 gelöst. Ausgestaltungen und Weiterbildungen des Erfindungsgedankens sind Gegenstand von Unteransprüchen.

Vorteil der Erfindung ist es, daß die Bedienung sowohl des Autoradios als auch des Autotelefons über die selbe Bedieneinheit erfolgen. Dadurch werden keine zusätzlichen Elemente in das Umfeld des Fahrers oder Beifahrers gebracht, die diesen in seiner Bewegungsfreiheit einschränken könnten. Andererseits sind die störempfindlichen Einheiten des Autotelefons und des Autoradios soweit voneinander entfernt, daß Störungen wie beispielsweise EMV-Störungen so gut wie nicht auftreten.

Darüber hinaus hat die Erfindung den Vorteil, daß der zusätzliche Aufwand für die Bedienung und Steuerung des Autotelefons verhältnismäßig gering ist und die Sende-Empfangs-Einheit für das Autotelefon separat angeordnet ist. Daher kann sie auf einfache Weise von den übrigen Einheiten getrennt bzw. mit diesen verbunden werden. Demzufolge können aber Standardautoradios ohne weiteres mit den zusätzlichen Bedien- und Steuermitteln versehen werden und unabhängig davon, ob sie mit oder ohne Autotelefon benutzt werden, verkauft werden. Wird die Funktion eines Autotelefons gewünscht, so kann zusätzlich auch die Sende-Empfangs-Einheit dazu erworben bzw. das Autoradio ohne weiteres später nachgerüstet werden.

Erreicht wird dies bei einer Anordnung mit einer ersten und einer zweiten Antenne, einer an die erste Antenne angeschlossenen Rundfunksempfangseinheit, einer an die zweite Antenne angeschlossenen Sende-Empfangs-Einheit für Mobiltelefonie, einer Bedieneinheit zur Mensch-Maschine-Kommunikation und einer, mit der Rundfunkempfangseinheit, der Sende-Empfangs-Einheit für Mobiltelefonie und der Bedieneinheit verbundenen Steuereinheit dadurch, daß die Sende-Empfangs-Einheit für Mobiltelefonie von der Rundfunkempfangseinheit abgesetzt und im Bereich der Außenwand des Kraftfahrzeuges angeordnet ist.

Bevorzugt wird dabei die zweite Antenne in unmittelbarer Nähe zur Sende-Empfangs-Einheit für Mobiltelefonie angeordnet. Damit wird vorteilhafterweise ein Verlust der Antennenleistung aufgrund eines langen Kabels zwischen Sende-Empfangs-Einheit und der zweiten Antenne verhindert.

Die Sende-Empfangs-Einheit für Mobiltelefonie weist dabei bevorzugt einen Basisbandteil und einen Hochfrequenzteil zum Senden und Empfangen von Signalen, wie beispielsweise Signalen nach dem GSM-Standard, auf.

Die Sende-Empfangs-Einheit für Mobiltelefonie kann beispielsweise an der Frontscheibe oder der Heckscheibe des Kraftfahrzeuges angeordnet werden. Dadurch läßt sich mit geringem Aufwand die Sende-Empfangs-Einheit an einer Außenwand des Kraftfahrzeuges anbringen, wobei die Frontscheibenmontage zusätzlich den Vorteil hat, daß eine Verbindung zwischen der Sende-Empfangs-Einheit und den übrigen Einheiten relativ einfach über eine kurze Kabelverbindung herzustellen ist, während bei der Heckscheibenmontage vorteilhafterweise aufgrund des größeren Abstands die Störsicherheit vergrößert ist. Darüber hinaus kann bei einer Montage der Sende-Empfangs-Einheit an der Front- bzw. Heckscheibe in unmittelbarer Nähe zur zweiten Antenne plaziert werden, wobei die zweite Antenne entweder innerhalb der Scheibe oder aber auch in unmittelbarer Nähe zur Sende-Empfangs-Einheit außerhalb des Fahrzeuges angeordnet werden kann.

In die Bedieneinheit kann beispielsweise eine Freisprecheinrichtung mitaufgenommen werden, um eine Kommunikation des Fahrers ohne Zuhilfenahme seiner Hände während des Fahrers zu ermöglichen.

Bei einer Weiterbildung der Erfindung ist die Steuereinheit mit einer Empfangs-Einheit für GPS-Signale (GPS = Global Positioning System) verbunden. Diese Empfangs-Einheit ist bevorzugt in unmittelbarer Nähe zur Sende-Empfangs-Einheit für Mobiltelefonie angeordnet und/oder ist ebenso wie die Sende-Empfangs-Einheit an die zweite Antenne angeschlossen.

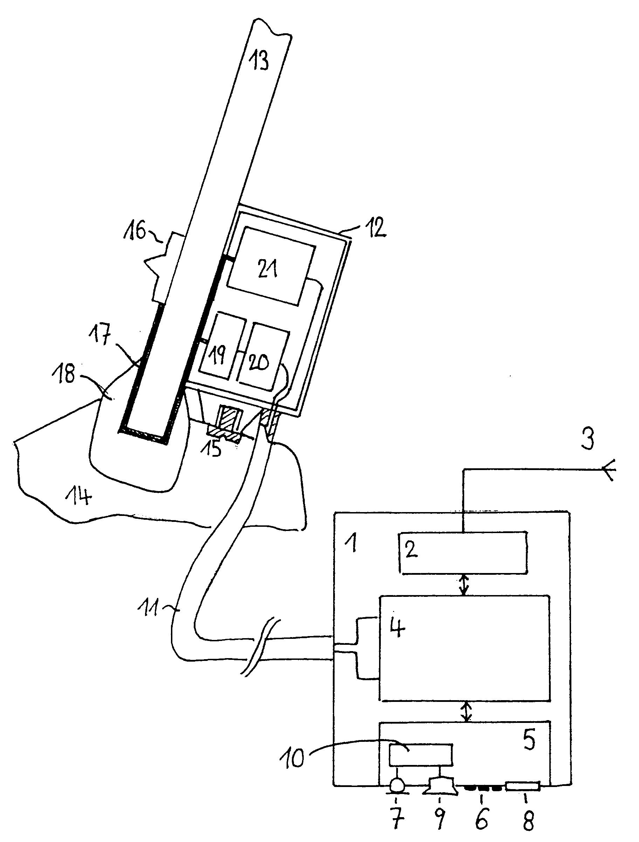

Die Erfindung wird nachfolgend anhand des in der einzigen Figur der Zeichnung dargestellten Ausführungsbeispiels näher erläutert.

Beim Ausführungsbeispiel ist in einem nicht näher dargestellten Fahrzeug ein Autoradio 1 beispielsweise in das Armaturenbrett eingebaut. Das Autoradio 1 enthält eine Rundfunkempfangseinheit 2, die eingangsseitig an eine Rundfunkantenne 3 angeschlossen ist. Die Rundfunkantenne 3 ist dabei an beliebiger Stelle am Fahrzeug wie beispielsweise am Dach angebracht. Die Rundfunkempfangseinheit 2 kann beispielsweise aus Hochfrequenzteil, Mischer, Zwischenfrequenzverstärker, verschiedenen Demodulatoren, Dekodern etc. bestehen und gibt beispielsweise zwei Stereo-Niederfrequenzsignale an eine Steuereinheit 4 ab. Die Bedieneinheit 5 bildet ein Mensch-Maschine-Interface, mit dem Informationen und Befehle vom Nutzer über entsprechende Bedienelemente in das Autoradio 1 eingegeben werden und umgekehrt im Autoradio 1 erzeugte Informationen optisch und akustisch an den Nutzer ausgegeben werden. Die Bedieneinheit 5 enthält dazu unter anderem Tasten und Drehknöpfe 6 sowie ein Mikrofon 7 zur Eingabe und ein Display 8 sowie einen Lautsprecher 9 zur Ausgabe von Informationen. Schließlich ist noch eine Freisprechschaltung 10 vorgesehen, die mit dem Mikrofon 7 und dem Lautsprecher 9 gekoppelt ist und die mit diesen eine Freisprecheinrichtung bildet, um beispielsweise dem Fahrer ein Telefonieren im wesentlichen ohne Zuhilfenahme seiner Hände zu ermöglichen.

An die Steuereinheit 4 und damit das Autoradio 1 ist über eine Leitungsverbindung 11 ein separates Modul 12 angeschlossen, das beispielsweise neben einer Frontscheibe 13 des Fahrzeuges angeordnet und dort mit einem Karosserieteil 14 mittels einer Schraube 15 befestigt ist. Das Modul 12 befindet sich somit noch im Fahrzeuginneren, während an entsprechender Stelle an der Frontscheibe 12 außerhalb des Fahrzeuges eine Mobilfunkantenne 16 beispielsweise durch Kleben angebracht ist. Die Verbindung zwischen Mobilfunkantenne 16 und Modul 12 wird z. B. mittels eines Folienleiters 17, der beispielsweise um die Unterseite der Frontscheibe 12 herumgeführt und in einen Scheibendichtgummi 18 eingebettet ist, oder über eine kapazitive Kopplung hergestellt. Der Scheibendichtgummi 18 isoliert die Scheibe 12 gegenüber den Karosserieteilen 14 gegen das Eindringen von Schmutz und Feuchtigkeit. Das Modul 12 kann jedoch anstelle der Frontscheibe 13 in gleicher Weise auch an der Heckscheibe oder an Teilen der Karosserie befestigt werden.

Das Modul 12 enthält ein Hochfrequenzteil 19 und ein Basisbandteil 20, die beide sowohl zum Empfangen als auch zum Senden von GSM-Signalen geeignet sind. Somit bilden das Hochfrequenzteil 19 und das Basisbandteil 20 zusammen eine Sende-Empfangs-Einheit für Mobilfunktelefonie, deren Steuerung und niederfrequente Signalverarbeitung durch das Autoradio 1 vorgenommen wird. Des weiteren enthält das Modul 12 eine Empfangs-Einheit 21, die zum Empfangen von Signalen nach dem GPS-Standard geeignet ist und die ebenso wie das Hochfrequenzteil 19 die Mobilfunkantenne 16 nutzt.

Das Modul 12 ist folglich vom Autoradio 1 aus bedien- und steuerbar. Die Steuereinheit 4 im Autoradio 1 steuert dabei sowohl die Empfangs-Einheit 21, das Hochfrequenzteil 19 in Verbindung mit Basisbandteil 20 sowie die Rundfunkempfangseinheit 2 und wertet von diesen Einheiten erhaltene Signale aus, bereitet diese auf und gibt sie mittels der Bedieneinheit 5 an den Nutzer weiter. Die Ausgabe der aufbereiteten Signale erfolgt dabei im wesentlichen akustisch und optisch, d. h. mittels Lautsprecher 9 und Display 8. Zusätzlich können weitere niederfrequente Einheiten wie beispielsweise Endstufen in Verbindung mit zusätzlichen Lautsprechern insbesondere zur Schallwiedergabe stereofoner Signale der Rundfunkempfangseinheit 2 vorgesehen werden, die aber beim Ausführungsbeispiel aus Gründen der Übersichtlichkeit weggelassen wurden. Ein- und Ausgabe akustischer Informationen erfolgen im Mobilfunkbetrieb bevorzugt über Mikrofon 7 und Lautsprecher 9 in Verbindung mit der Freisprechschaltung 10. Mit Hilfe der Tasten und Drehknöpfe 6 teilt der Nutzer der Steuereinheit 4 seine Wünsche und Befehle mit, die daraufhin die angeschlossenen Einheiten entsprechend steuert. Als optische Informationen werden mittels des Displays 8 insbesondere alle bei üblichem Rundfunkempfang auftretenden Sekundärinformationen wie beispielsweise Empfangsfrequenz, Lautstärke, Ton etc., Informationen zum jeweiligen Betriebszustand der gesamten Anordnung sowie von der Empfangs-Einheit 21 gelieferte Informationen ausgegeben. Akustisch können zum Beispiel zusätzliche Hinweise oder Warnsignale dem Nutzer dargeboten werden.

### Bezugszeichenliste

- 1: Autoradio
- 2: Rundfunksempfangseinheit
- 3: Rundfunkantenne
- 4: Steuereinheit
- 5: Bedieneinheit
- 6: Tasten und Drehknöpfe
- 7: Mikrofon
- 8: Display
- 9: Lautsprecher
- 10: Freisprechschaltung
- 11: Leitungsverbindung
- 12: Modul
- 13: Frontscheibe
- 14: Karosserieteil
- 15: Schraube
- 16: Mobilfunkantenne
- 17: Folienleiter
- 18: Scheibendichtgummi
- 19: Hochfrequenzteil
- 20: Basisbandteil
- 21: Empfangseinheit für GPS-Signale

## Patentansprüche

1. Anordnung zum Rundfunkempfang und Telefonieren in einem Kraftfahrzeug mit
- einer ersten und einer zweiten Antenne (3, 16),
- einer an die erste Antenne (3) angeschlossenen Rundfunkempfangsheit (2),
- einer an die zweite Antenne (16) angeschlossenen Sende-Empfangs-Einheit (19, 20) für Mobiltelefonie,
- einer Bedieneinheit (5) zur Mensch-Maschine-Kommunikation und
- einem mit der Rundfunkempfangseinheit (2), der Sende-Empfangs-Einheit (19, 20) für Mobiltelefonie und der Bedieneinheit (5) verbundenen Steuereinheit (4), wobei die Sende-Empfangs-Einheit (19, 20) für Mobiltelefonie abgesetzt ist von der Rundfunkempfangseinheit (2) und im Bereich der Außenwand des Kraftfahrzeuges angeordnet ist.

2. Anordnung nach Anspruch 1,
bei der zweite Antenne (16) und Sende-Empfangs-Einheit (19, 20) für Mobiltelefonie in unmittelbarer Nähe zueinander angeordnet sind.

3. Anordnung nach Anspruch 1 oder 2,
bei der die Sende-Empfangs-Einheit (19, 20) für Mobiltelefonie einen Basisbandteil (20) und einen Hochfrequenzteil (19) zum Senden und Empfangen aufweist.

4. Anordnung nach einem der Ansprüche 1 bis 3,
bei der die Sende-Empfangs-Einheit (19, 20) für Mobiltelefonie an der Frontscheibe (13) angeordnet ist.

5. Anordnung nach einem der Ansprüche 1 bis 3,
bei der die Sende-Empfangs-Einheit (19, 20) für Mobiltelefonie an der Heckscheibe angeordnet ist.

6. Anordnung nach einem der Ansprüche 1 bis 5,
bei der die zweite Antenne (16) außerhalb des Fahrzeuges angeordnet ist.

7. Anordnung nach einem der Ansprüche 1 bis 6,
bei der die Bedieneinheit (5) eine Freisprecheinrichtung (7, 9, 10) aufweist.

8. Anordnung nach einem der Ansprüche 1 bis 7,
bei der die Steuereinheit (4) zudem mit einer abgesetzt angeordneten Empfangs-Einheit (21) zum Empfang von GPS-Signalen verbunden ist.

9. Anordnung nach Anspruch 8,
bei der die Empfangs-Einheit (21) zum Empfang von GPS-Signalen in unmittelbarer Nähe zur Sende-Empfangs-Einheit (19, 20) für Mobiltelefonie angeordnet ist.

10. Anordnung nach Anspruch 9,
bei der die Sende-Empfangs-Einheit (19, 20) für Mobiltelefonie an der zweiten Antenne (16) angeschlossen ist.
